# EUROPÄISCHE PATENTSCHRIFT

(11) **EP 0 484 811 B1**
(45) Veröffentlichungstag und Bekanntmachung des Hinweises auf die Patenterteilung: **20.03.1996**
(21) Anmeldenummer: 91118484.4
(22) Anmeldetag: 30.10.1991
(51) Int. Cl.: H02B 1/36

(54) **Elektrischer Schaltschrank für Niederspannungsanlagen**
Electrical switchgear cabinet for low voltage installations
Armoire de commutation électrique pour installations à basse tension

(30) Priorität: 05.11.1990 DE 4035081
(43) Veröffentlichungstag der Anmeldung: 13.05.1992
(73) Patentinhaber: ABB PATENT GmbH, D-68309 Mannheim (DE)
(72) Erfinder: Mayer, Hartwig, W-6934 Neckargerach (DE); Hofmann, Manfred, W-6930 Eberbach (DE); Riedinger, Hans-Peter, W-6935 Waldbrunn 1 (DE)
(74) Vertreter: Fritsch, Klaus

(56) Entgegenhaltungen:
- EP-A- 0 127 298
- EP-A- 0 274 627
- DE-A- 1 640 991
- GB-A- 1 171 209
- US-A- 3 059 072
- US-A- 3 066 244
- US-A- 3 299 324
- US-A- 4 002 864

## Beschreibung

Die Erfindung betrifft einen elektrischen Schaltschrank gemäß dem Oberbegriff des Anspruches 1.

Ein Niederspannungsschaltschrank der eingangs genannten Art besitzt einen oder mehrere Einschübe, die bei einer bekannten Anordnung neben- und/oder übereinander innerhalb eines Schrankes in Einschubfächern untergebracht sind. Die Einschübe besitzen Rollen, die auf Schienen im Schaltschrank verfahrbar sind, wobei die Schienen entweder starr oder teleskopartig ineinander verschiebbar sind.

Alle Einschübe sind quadratisch oder mehr oder weniger rechtekkig und müssen, wenn sie eingebaut werden, mit der Hand unter Aufwendung recht hoher Körperkraft in die Höhe des Einschubfaches angehoben und dann in die Schienen eingesetzt werden; dies ist bei relativ kleinen Einschüben mit geringer oder gewichtsmäßig leichter Bestückung relativ einfach; Einschübe, wie sie bei Stromversorgungssystemen für Bereiche der Telekommunikationstechnik bekannt geworden sind, sind gewichtsmäßig schwer, so daß das Einsetzen des Einschubes in sein Einschubfach Probleme mit sich bringt. Besonders schwierig ist dies bei Einschüben, deren Höhe etwa der Höhe des Schaltschrankes entspricht.

Aus der DE-AS 11 83 157 ist ein Schaltschrank bekannt geworden, dessen Einschübe, die in vertikaler Richtung niedrig sind, mit einem Rastbolzen in eine starre Schiene eingehängt werden und aus einer vertikal nach unten hängenden Stellung in die horizontale Lage verschwenkt werden können, so daß sie in das Einschubfach hineingeschoben werden können. Solche Einschübe sind aber mit Einschüben, die in vertikaler Erstreckung langgestreckt rechteckig sind, nicht vergleichbar.

Aus der DE-AS 12 91 398 ist eine Niederspannungsanlage bekannt geworden, die Seitenwände aufweist, an denen Schienen angeordnet sind, die einen herausschwenkbaren Abschnitt aufweisen. Dieser herausschwenkbare Abschnitt ist als Einfahrhilfe für einen Schalter gedacht.

Eine ähnliche Lösung zeigt auch die CH-PS 338 508.

Die US-A 3 066 244 zeigt einen elektrischen Schaltschrank der eingangs genannten Art mit einem in ein Einschubfach des Schaltschrankes einschiebbaren rechteckigen Einschub zur Aufnahme von elektrischen und/oder elektronischen Bauteilen zum Schalten, Regeln und dgl. Der Einschub besitzt an seinen beiden Seiten im Bereich des Bodens des Einschubes je einen Zapfen, der auf einer mit einer Aussparung versehenen Führungsschiene aufgleitet und in der Aussparung gehalten wird. Im vorderen Bereich liegt das vordere Ende des Einschubes auf einer Querverstrebung im Schaltschrank auf. Das Einhängen des Einschubes erfolgt dann so, daß der Einschub in Montagerichtung in das Schubfach eingesetzt, in dem die Zapfen auf eine Schrägfläche an beiden Seiteninnenwänden des Einschubfaches aufgelegt werden, und sodann nach innen hineingeschoben werden muß.

Diese Montageart ist im wesentlichen verwendbar bei solchen Einschüben, die im Vergleich zu ihrer Breite niedrig sind und in ein Einschubfach eingesetzt werden sollen, dessen Höhe im Vergleich zur Breite niedrig ist. Einschübe, die eine vertikal langgestreckte Form aufweisen, die ggf. über die gesamte Höhe des Schaltschrankes verlaufen, können auf diese Weise wegen ihres Gewichtes nicht einfach montiert werden.

Aufgabe der Erfindung ist es, einen Schaltschrank der eingangs genannten Art zu schaffen, der leicht und ohne Anwendung größerer Körperkraft in sein Einschubfach einsetzbar ist.

Diese Aufgabe wird erfindungsgemäß gelöst durch die kennzeichnenden Merkmale des Anspruches 1.

Erfindungsgemäß also ist der Schaltschrank dadurch gekennzeichnet, daß der Einschub an seiner Unterseite im Bereich seiner Vorderseite ein Einhängegelenk in Form je eines an beiden Seitenflächen des Einschubes in dessen Bodenbereich vorgesehenen Langloches, welches an seinem der Vorderseite des Einschubes abgewandten Ende eine Tasche aufweist, wodurch ein Haken gebildet ist, aufweist, welches Einhängegelenk zur Montage in ein in Bodennähe angeordnetes Gegenstück in Form je eines an sich gegenüberliegenden, das Einschubfach zumindest teilweise begrenzenden Seitenflächen jedes Einschubfaches angeordneten Zapfens am Schaltschrank einhängbar ist, wobei das Langloch zur Bodenseite hin durch eine Öffnung geöffnet ist, so daß beide Zapfen beim Einhängen des Einschubes durch die Öffnungen in jedes Langloch gelangen, derart, daß der Einschub aus einer schräg nach vor geklappten ersten Stellung (Einhängestellung) nach dem Einhängen in eine zweite Stellung (Einfahrstellung) schwenkbar ist, in der der Einschub in seine eingeschobene Stellung und umgekehrt verfahrbar ist.

Der Einschub wird zur Montage in einer zur Horizontalen schräg verlaufenden Stellung in das Einhängegelenk eingehängt, in die vertikale Stellung verschwenkt und in die eingeschobene Stellung verbracht.

Da die Langlöcher und die Zapfen lediglich einen geringen Abstand vom Boden aufweisen, ist das Einhängen mit geringer Körperkraft durchzuführen; nachdem der Einschub eingehängt ist, ist lediglich nur die senkrecht verlaufende Gewichtskomponente des schräg vorgelagerten Einschubes bzw. das Gewichtsmoment anzuheben. Bei einer Stellung von 45° zur Horizontalen ist die Körperkraft, die noch aufzubringen ist, um den Einschub in die vertikale Stellung zu verbringen, relativ gering.

Zur besseren Montage ist an der Unterseite jedes Einschubes ein Rahmen befestigt, an dem die Langlöcher sowie ggf. Rollen angeordnet sind.

Die erfindungsgemäße Ausführung und Ausgestaltung kann insbesondere dann vorteilhaft angewendet werden, wenn der Einschub eine in vertikaler Richtung rechteckig langgestreckte Kontur aufweist, dergestalt, daß die Höhe jedes Einschubes ein Mehrfaches der Breite ist und/oder der Höhe des Schaltschrankes entspricht.

Wenn an der Rückwand jedes Einschubes zwei in Abstand zueinander angeordnete Handgriffe angebracht sind, dann kann der langgestreckt rechteckige Einschub in horizontaler Lage getragen und an dem Schaltschrank eingehängt werden; wegen der langgestreckten Kontur befindet sich die Einhängungsstelle immer relativ niedrig oberhalb des Bodens, auf dem der Schaltschrank aufsteht, so daß der Einschub nicht - wie im Extremfall bei bekannten Einschubarten - auf eine über Kopf befindliche Höhe hochgehoben werden muß.

Eine weitere vorteilhafte Ausgestaltung der Erfindung ist dem Anspruch 7 zu entnehmen. Danach besitzt der Einschub in besonders vorteilhafter Weise einen in Einschieberichtung diesen durchdringenden Schraubenbolzen oder Schraubspindel, der bzw. die die Rückseite des Einschubes überragt und in ein am Schaltschrank angeordnetes Innengewinde eingeschraubt werden kann. Die Länge des Innengewindes und des Außengewindes an der Spindel entspricht der Länge, die benötigt wird, um die Kontaktstellen an der Rückwand des Einschubes und an der gegenüberliegenden Wandung des Schaltschrankes zu schließen. Die Kontakte sind dabei als Buchsen- und Steckkontakte ausgebildet, von denen insbesondere die am Schaltschrank befindlichen Kontakte als schwimmende Kontakte ausgebildet sind, die entsprechend evtl. auftretender Toleranzen quer zu Kontaktierungsrichtung beweglich angeordnet sind. Die Spindel kann mit einem Akkuschrauber oder ggf. mit einer Kurbel gedreht werden.

Wenn der Schaltschrank zur Aufnahme von Netzversorgungseinrichtungen, insbesondere von Gleichrichtern, Netzgeräten, Stromrichtern und dgl. für Telekommunikationsgeräte eingesetzt werden soll, dann enthält der Einschub Kondensatoren, die sich zur Vermeidung von Beschädigungen der elektronischen Bauteile während des Einschiebevorganges aufladen sollen.

Demgemäß ist jedem Einschubfach jeweils ein Kontaktelement vorgesehen, welches beispielsweise in der deutschen Gebrauchsmusteranmeldung G 87 17 645.9 beschrieben ist. Diese Kontaktelemente sind zweistufige Kontaktelemente; das Gegenkontaktstück am Einschub gelangt zunächst mit einem ersten Kontaktteil in elektrisch-galvanische Berührung; da zwischen den beiden Kontaktteilen ein Widerstand vorgesehen ist, der auf die Aufladung der im Einschub befindlichen Kondensatoren hin bemessen ist, fließt in die Kondensatoren zunächst über diesen Widerstand und das sog. erste Kontaktelement ein entsprechender Ladestrom. Erst nachdem sich die Kondensatoren aufgeladen haben, soll das zweite Kontaktteil jedes Kontaktelementes mit dem Gegenkontakt am Einschub in elektrisch-galvanische Verbindung gelangen. Wichtig ist, die Geschwindigkeit des Einschiebens so auf die Ladezeit abzustellen, daß das zweite Kontaktteil, mit dem praktisch der Widerstand im Kontaktelement überbrückt wird, erst dann vom Gegenkontakt im Einschub kontaktiert wird, wenn die Kondensatoren voll aufgeladen sind.

Dies kann in bevorzugter Weise durch geeignete Bemessung der Schraubspindel bewirkt werden. Wenn das Schraubgewinde eine geeignete Steigung und eine geeignte Länge aufweist, dann kann die Kontaktierungszeit an den Kontaktelementen bzw. die Ladezeit ach dann eingehalten werden, wenn man einen Elektroschrauber verwendet. Die Drehgeschwindigkeit des Elektroschraubers ist demgemäß auf die Steigung des Gewindes der Schraubspindel so eingestellt, bzw. die Gewindeabmessungen sind auf die Drehgeschwindigkeit des Schraubers so eingestellt, daß der Widerstand im Kontaktelement erst dann überbrückt ist, wenn die Kondensatoren aufgeladen sind.

Anhand der Zeichnung, in der einige Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:

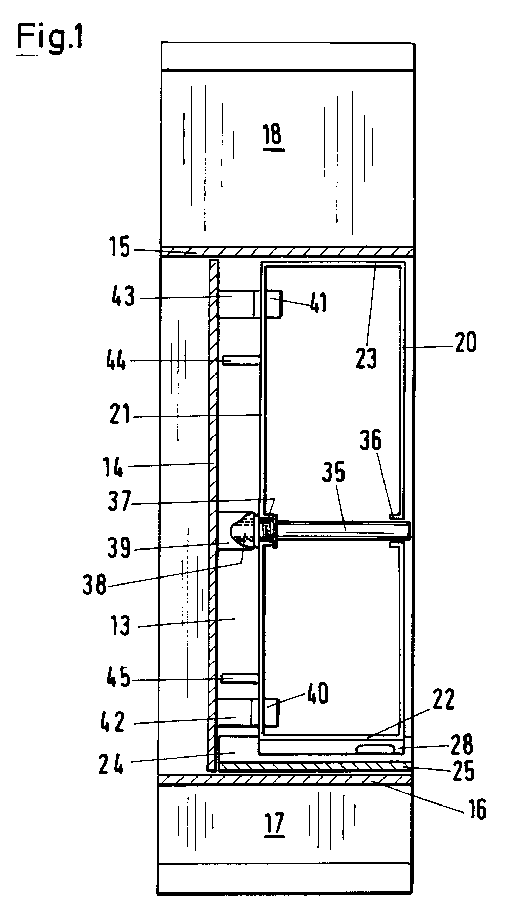

- Figur 1: einen Schaltschrank mit eingesetztem Einschub im Querschnitt,
- Figur 2: eine Vorderansicht des Schaltschrankes mit eingesetzten Einschüben,

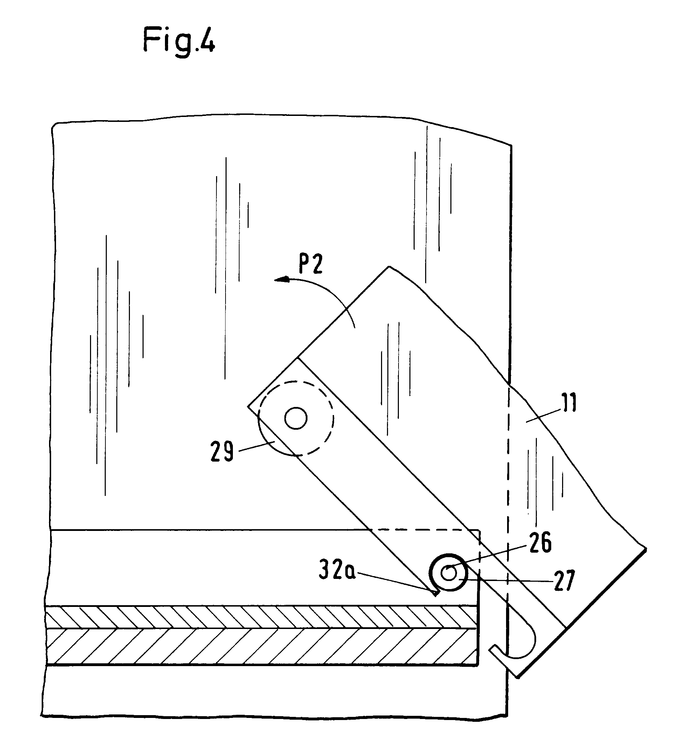

- Figur 3, 4 und 5: schematische Darstellungen jeweils unterschiedlicher Stellungen des Einschubes bezogen auf den Schaltschrank und
- Figur 6: eine schematische Teilansicht eines Schaltschrankes mit Einschub mit den Kontaktelementen gemäß DE-GM 87 17 645.9.

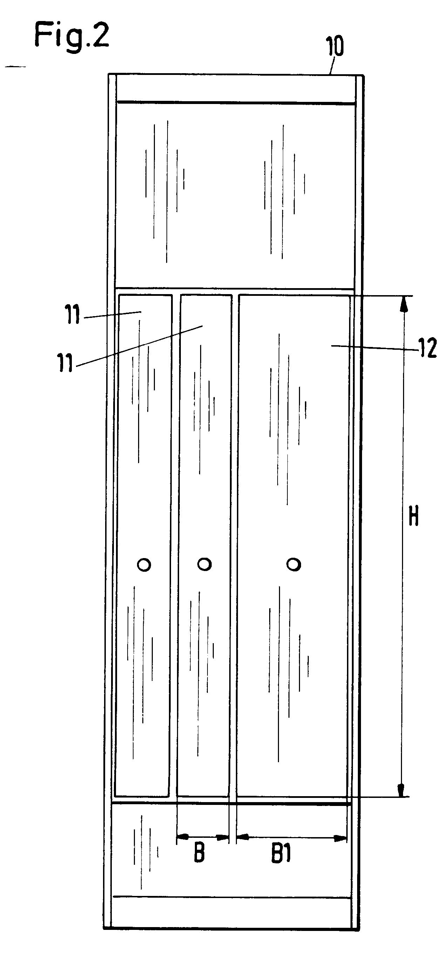

Es sei nun Bezug genommen auf die Figur 2. Diese zeigt einen Schaltschrank 10, in dem drei Einschübe 11 und 12 eingesetzt sind. Man erkennt aus der Figur 2, daß die Höhe H des Einschubes wesentlich größer ist als die Breite B, so daß die Kontur des Einschubes 11 eine deutlich langgestreckt rechteckige Form aufweist. Die Breite B₁ des Einschubes 12 ist hier doppelt so groß als die Breite B der Einschübe 11; gleichwohl besitzt auch der Einschub 12 eine deutlich langgestreckt rechteckige Kontur.

Die Einschübe 11 und 12 sind jeweils in ein Einschubfach 13 eingesetzt, wobei dieses Einschubfach von einer hinteren Wand 14, einer oberen Wand 15 und einer unteren Wand 16 abgeschlossen ist. In dem Raum 17 unterhalb der unteren Wand 16 befinden sich elektrische oder elektronische Schalt- und Steuerelemente, wogegen in dem Raum 18 oberhalb der oberen Begrenzungswand 15 Zuführ- oder Abführleitungen vorgesehen sind. Ggf. können in dem Raum 17 Zuführleitungen, Netzleitungen und dgl. verlegt sein.

Der Einschub besitzt eine vordere Wand 20, eine Rückwand 21, Seitenwände (nicht gezeigt) sowie Boden- und Dachwände 22 und 23. Unterhalb der Bodenwand 22 jedes Einschubes befinden sich in der Breite jedes Einschubes 11, 12 entsprechendem Abstand für jedes Einschubfach zwei am Schaltschrank befestigte Rahmenteile 24, an deren sich gegenüberliegenden Seitenwänden horizontal verlaufende Schienen 25 angebracht sind; außerdem befindet sich im Bereich der Vorderwand des Schaltschrankes 10 an jedem Rahmenteil 24 je ein Zapfen 26, an dem eine Rolle 27 gelagert ist.

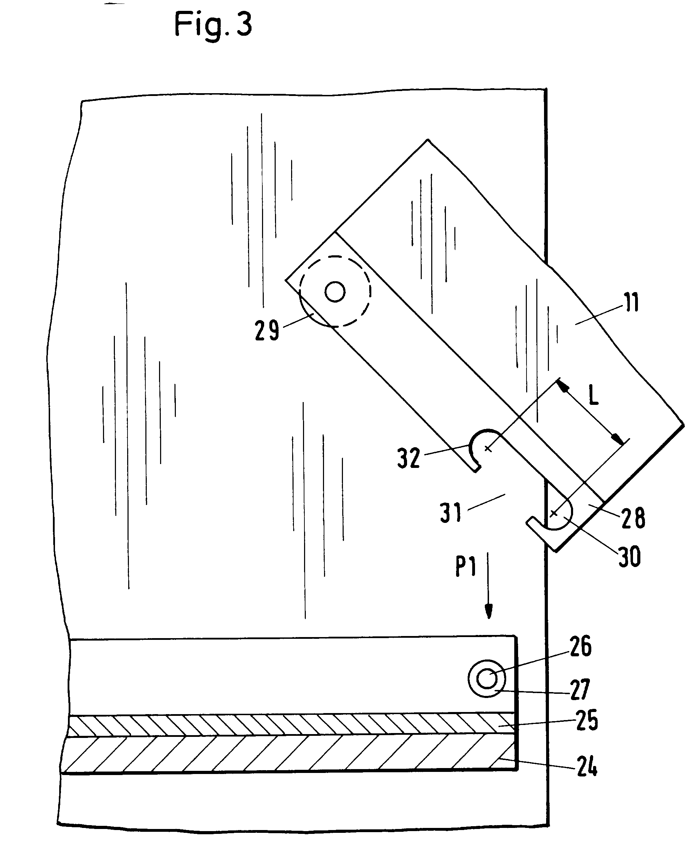

Der Einschub selbst besitzt an seinem unteren Ende einen Rahmen 28, der an seinem im Inneren des Schaltschrankes befindlichen Ende eine Rolle 29 (siehe Figur 3) und an dem entgegengesetzten, nach vorn zu liegenden Ende im Bereich der beiden Seitenwände des Einschubes je eine langlochförmige Aussparung 30 aufweist, die über eine Öffnung 31 nach unten offen sind.

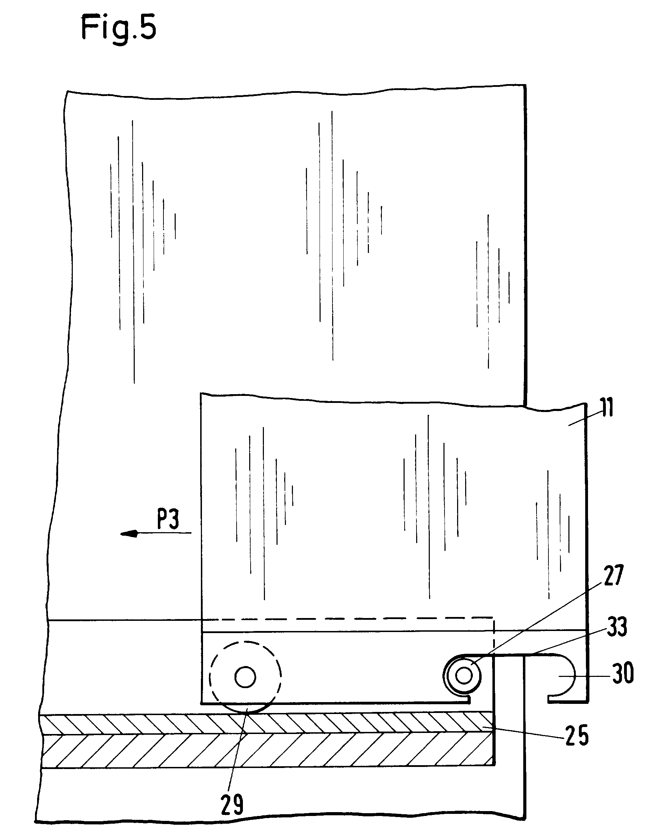

Zur Montage des Einschubes wird wie folgt vorgegangen: Zunächst wird der Einschub, so wie in Figur 3 dargestellt, in eine Stellung schräg zur Horizontalen verbracht, wobei er mittels Handgriffen 44 und 45 festgehalten werden kann. Sodann wird der Einschub in das Einschubfach eingefügt und zwar derart, daß die sich gegenüberliegenden Zapfen 26 mit den Rollen 27 durch die Öffnungen 31 in das Langloch 30 hineingelangen. Nach Absenken gemäß Pfeilrichtung P₁ greifen die Zapfen 26 mit den Rollen 27 in eine durch die Öffnung 31 gebildete Tasche 32, so daß sich der Einschub 11 in dieser Stellung an den Zapfen 26 und Rollen 27 abstützen kann. Mit anderen Worten: der Einschub wird im Bereich seiner horizontal verlaufenden vorderen Kante auf den Zapfen 26/27 aufgelagert, d. h. in diese eingehängt. Danach wird der Einschub 11 um den Zapfen 26/27 gemäß Pfeilrichtung P₂ geschwenkt, so daß er in die in Figur 5 gezeigte Lage gelangt, in der die Rollen 29 auf der Schiene 25 aufliegen. Die oberen Kanten 33 der Langlöcher 30 liegen auf den Zapfen 26 und Rollen 27 auf, so daß sich das Einschubgewicht auf den Rollen 29 und 27 abstützt. In dieser Stellung kann der Einschub 11 in Pfeilrichtung P₃ ins Innere des Einschubfaches hineingeschoben werden.

Zur Vereinfachung geschieht dies wie folgt:
Der Einschub 11 ist von einer im Einschub gelagerten Spindel 35 durchgriffen; diese Spindel 35 wird in Einzügen 36 an der vorderen Wand 20 bzw. 37 an der hinteren Wand 21 gelagert und so geführt, daß sie sich in der Horizontalen nicht verschieben kann. Der aus der Rückwand 21 des Einschubes herausragende Teil der Spindel 35 ist mit einem Außengewinde 38 versehen, welches in ein Innengewinde , das in einer Buchse 39 an der Rückwand 14 angeordnet ist, eingeschraubt werden kann. Durch das Einschrauben des Gewindes 38 in das Innengewinde der Buchse 39 wird der Einschub in Pfeilrichtung P₃ nach rückwärts verfahren.

Während dieses Einschubvorganges gelangen am Einschub befindliche Kontaktbuchsen 40 und 41 in Kontakt mit schwimmend an der Rückwand 14 aufgelagerten Kontaktsteckern 42 und 43. Schwimmend bedeutet, daß die Kontaktstecker 42 und 43 quer zu der Kontaktierungsrichtung verschieblich sind, so daß dadurch Toleranzen ausgeglichen werden können und immer eine korrekte Kontaktgabe zwischen den Kontaktstellen 40/42 bzw. 41/43 gewährleistet ist.

Die Gewindelänge bzw. die Einschraubtiefe des Gewindes 38 in das Gewinde der Buchse 39 entspricht dabei der Länge L des Langloches 30 und der Einstecklänge der Kontaktstifte in die Kontaktbuchsen.

An der hinteren Wand des Einschubfaches 60 sind Kontaktelemente 61 angebracht, die den Kontaktelementen entsprechen, wie sie in dem DE-GM 87 17 645.9 beschrieben sind. Jedes Kontaktelement besitzt einen ersten Kontakatteil 62, der von einem zweiten Kontaktteil 63, der als Buchse ausgebildet sein kann, durch eine Isolierschicht 64 elektrisch isoliert ist. Zwischen dem ersten Kontaktteil 62 und dem zweiten Kontaktteil 63 befindet sich ein Widerstand 65, der mit seinen beiden Enden jeweils an dem Kontaktteil 62 bzw. 63 angeschlossen ist. An einer elektrischen Anschlußleitung 66 ist das zweite Kontaktteil 63 mittels einer geeigneten Schraubenverbindung 67 elektrisch-galvanisch angeschlossen. Wie in dem DE-GM 87 17 645.9 beschrieben, könnte das zweite Kontaktteil 63 auch ein Gewindesackloch aufweisen, so daß es an dem Leiter 66 mittels einer Schraube befestigt werden kann.

An der hinteren Wandung 70 des Einschubfaches 11 ist eine Gegenkontaktbuchse 71 schwimmend gelagert, so daß sie Bewegungen in Pfeilrichtung P bzw. senkrecht zur Zeichenebene ausführen kann. Das Gegenkontaktstück 71 besitzt eine Kontaktbuchse 72, in der ggf. - wie in der Zeichnung dargestellt - ein Multikontakt 73 untergebracht ist.

Wenn der Einschub in Pfeilrichtung P₅ verschoben wird, dann gelangt zunächst das erste Kontaktteil 42 in elektrisch-galvanische Berührung mit den Kontaktlamellen 73 des Gegenkontaktes 71, so daß ein Strom über den Widerstand 65 fließt, durch den - wie in dem DE-GM 87 17 645 beschrieben - im Einschub befindliche Kondensatoren aufgeladen werden können. Nachdem diese Kondensatoren aufgeladen sind, gelangt der Gegenkontakt 71 mit dem zweiten Kontaktteil 63 in Berührung, so daß der Hauptkontakt geschlossen ist.

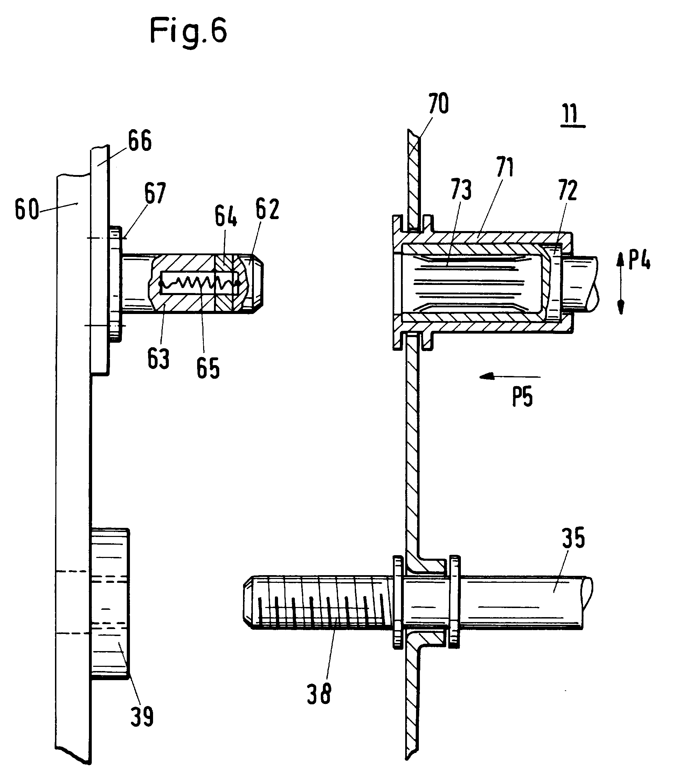

Das Außengewinde 38 der Spindel 35 ist nun so bemessen, daß bei Benutzung eines Akkuschraubers der Gegenkontakt 71 mit dem ersten Kontaktteil 62 so lange in Berührung bleibt, und nur mit diesem, bis die Kondensatoren, die in der Zeichnung Figur 6 nicht dargestellt sind, aufgeladen sind. Erst danach soll das zweite Kontaktteil 63 mit dem Gegenkontakt 71 in Berührung gelangen. Wenn eine Betätigung der Schraubspindel 35 mit der Kurbel vorgenommen wird, dann kann das Gewinde ggf. auch eine andere Konfiguration haben. Der Widerstandswert des Widerstandes 65, die Gewindelänge und -steigung der Schraubspindel 35 und damit auch des Innengewindes der Buchse 39 (siehe Figur 6) müssen so angepaßt sein, daß auch bei maximaler Drehgeschwindigkeit des vorgesehenen Montagewerkzeuges Kurbel und/oder Akkuschrauber die Ladezeit der Kondensatoren gewährleistet ist.

Zur Vermeindung einer axialen Verschiebung im Einschub besitzt die Spindel 35 zwei Vorsprünge 35a, 35b, zwischen denen die Wandung 70 befindlich ist.

## Patentansprüche

1. Elektrischer Schaltschrank, insbesondere für Niederspannungsanlagen, mit wenigstens einem in ein Einschubfach des Schaltschrankes einschiebbaren, mit Rollen an seiner Unterseite versehenen, in vertikaler Richtung langgestreckt rechteckigen Einschub (11, 12) zur Aufnahme von elektrischen und/oder elektronischen Bauteilen zum Schalten, Regeln und dgl., welcher Einschub an seiner im Inneren des Schaltschrankes befindlichen Rückseite wenigstens eine Kontaktstelle (71, 72, 73) aufweist, die mit je einem ortsfesten Gegenkontakt (62, 63, 64) im Schaltschrank kontaktierbar ist, dadurch gekennzeichnet, daß der Einschub (11, 12) an seiner Unterseite im Bereich seiner Vorderseite ein Einhängegelenk (30, 32) in Form je eines an beiden Seitenflächen des Einschubes in dessen Bodenbereich vorgesehenen Langloches, welches an seinem der Vorderseite des Einschubes abgewandten Ende eine Tasche (32) aufweist, wodurch ein Haken gebildet ist, aufweist, welches Einhängegelenk zur Montage in ein in Bodennähe angeordnetes Gegenstück (26, 27) in Form je eines an sich gegenüberliegenden, das Einschubfach zumindest teilweise begrenzenden Seitenflächen jedes Einschubfaches angeordneten Zapfens (26) am Schaltschrank einhängbar ist, wobei das Langloch zur Bodenseite hin durch eine Öffnung (31) geöffnet ist, so daß beide Zapfen beim Einhängen des Einschubes durch die Öffnungen (31) in jedes Langloch (30) gelangen, derart, daß der Einschub aus einer schräg nach vor geklappten ersten Stellung (Einhängestellung) nach dem Einhängen in eine zweite Stellung (Einfahrstellung) schwenkbar ist, in der der Einschub in seine eingeschobene Stellung und umgekehrt verfahrbar ist.

2. Schaltschrank nach Anspruch 1, dadurch gekennzeichnet, daß am Zapfen (26) eine Rolle (27) vorgesehen ist, auf der eine der Kanten (33) des Langloches (30) abrollt.

3. Schaltschrank nach einem der vorherigen Ansprüche, dadurch gekennzeichnet, daß an der Unterseite des Einschubes (11, 12) ein Rahmen befestigt ist, an dem das Einhängeelement, insbesondere die Langlöcher angebracht sind.

4. Schaltschrank nach einem der vorherigen Ansprüche, dadurch gekennzeichnet, daß die Höhe (H) jedes Einschubes ein deutlich mehrfaches ist als die Breite (B, B₁).

5. Schaltschrank nach Anspruch 4, dadurch gekennzeichnet, daß die Höhe des Einschubes (11, 12) etwa der Höhe des Schaltschrankes entspricht.

6. Schaltschrank nach einem der vorherigen Ansprüche, dadurch gekennzeichnet, daß an der Rückwand jedes Einschubes (11, 12) zwei in Abstand zueinander angeordnete Handgriffe (44, 45) angeordnet sind, so daß der langgestreckt rechteckige Einschub (11, 12) in horizontaler Lage mit seiner Vorderseite nach unten weisend manuell transportierbar ist.

7. Schaltschrank nach einem der vorherigen Ansprüche, dadurch gekennzeichnet, daß der Einschub (11, 12) von einer in Einschieberichtung verlaufenden, mit einem Außengewinde (38) versehenen relativ zum Einschub (11, 12) unverschieblichen Spindel (35) durchgriffen ist, wobei der mit dem Gewinde (38) versehene Abschnitt der Spindel aus der Rückwand des Einschubes (11, 12) herausragt, und daß an der Rückwand des Einschubfaches ein Innengewinde vorgesehen ist, in welches das Außengewinde (38) der Spindel (35) einschraubbar ist, so daß durch Verdrehen der Spindel und Einschrauben des Außengewindes (38) in das Innengewinde der Einschub in die eingeschobene Stellung verfahrbar ist.

8. Schaltschrank nach Anspruch 7, bei dem wenigstens ein Einschub Netzgeräte zur Versorgung von elektronischen Anlagen aufweist, in denen Kondensatoren vorgesehen sind, wobei am Schaltschrank ein zweigeteilter Kontaktstecker mit einem zwischen den Teilen befindlichen Widerstand angeordnet ist, der in einem Einschub befindliche Kontaktbuchse derart eingreift, daß nach Kontaktierung des Gegenkontaktes mit dem ersten Kontaktteil ein Strom durch im Kontaktstecker angeordneten Widerstand fließt, wodurch die Kondensatoren aufgeladen werden, und daß erst nach Aufladung der Kondensatoren der zweite Kontaktteil von dem Gegenkontakt kontaktiert wird, so daß der Widerstand überbrückt ist, dadurch gekennzeichnet, daß das Gewinde des Innengewindes in der Buchse (39) und des Außengewindes (38) der Spindel derart bemessen sind, daß bei Verdrehen der Schraubspindel (35) mittels eines handeslüblichen Elektroschraubers bei dessen maximaler Drehgeschwindigkeit der Zeitraum zwischen der Kontaktierung des ersten Kontaktteils (62) und des zweiten Kontaktteils (63) mit dem Gegenkontakt derart ist, daß die Aufladung der Kondensatoren im Einschub (11) beendet ist, bevor das zweite Kontaktteil (63) von dem Gegenkontakt am Einschub (11) kontaktiert wird.

## Claims

1. Electrical switchgear cabinet, in particular for low voltage installations, having at least one withdrawable insert (11, 12), which can be pushed into a withdrawable-insert compartment in the switchgear cabinet, is provided with rollers on its underneath and is rectangular while being elongated in the vertical direction, for accommodating electrical and/or electronic components for switching, regulating and the like, which withdrawable insert has on its rear, which is located in the interior of the switchgear cabinet, at least one contact point (71, 72, 73) with which contact can be made by in each case one stationary mating contact (62, 63, 64) in the switchgear cabinet, characterized in that the withdrawable insert (11, 12) has on its underneath, in the region of its front, a hook-in joint (30, 32) in the form of in each case one elongated hole, which is provided on both side surfaces of the withdrawable insert, in its base region, and has a pocket (32) at its end facing away from the front of the withdrawable insert, by means of which a hook is formed, which hook-in joint can be hooked, for installation on the switchgear cabinet, into a mating piece (26, 27), which is arranged close to the base and is in the form of in each case one pin (26) which is arranged on mutually opposite side surfaces, which at least partially bound the withdrawable insert compartment, of each withdrawable-insert compartment, the elongated hole being opened towards the base through an opening (31) so that both pins pass through the openings (31) into each elongated hole (30) when the withdrawable insert is hooked in, in such a manner that the withdrawable insert can be pivoted, after it has been hooked in, from a first position (hooked-in position) in which it is folded obliquely forwards into a second position (insertion position) in which the withdrawable insert can be moved into its pushed-in position and vice versa.

2. Switchgear cabinet according to Claim 1, characterized in that a roller (27) is provided on the pin (26), on which roller (27) one of the edges (33) of the elongated hole (30) rolls.

3. Switchgear cabinet according to one of the preceding claims, characterized in that a frame is attached to the underneath of the withdrawable insert (11, 12), to which frame the hooking-in element, in particular the elongated holes, are fitted.

4. Switchgear cabinet according to one of the preceding claims, characterized in that the height (H) of each withdrawable insert is a considerable multiple of the width (B, B₁).

5. Switchgear cabinet according to Claim 4, characterized in that the height of the withdrawable insert (11, 12) corresponds approximately to the height of the switchgear cabinet.

6. Switchgear cabinet according to one of the preceding claims, characterized in that two handles (44, 45), which are arranged at a distance from one another, are arranged on the rear wall of each withdrawable insert (11, 12), such that the withdrawable insert (11, 12), which is rectangular and elongated, can be transported in the horizontal position by hand, with its front pointing downwards.

7. Switchgear cabinet according to one of the preceding claims, characterized in that a spindle (35) which runs in the insertion direction, is provided with an external thread (38) and cannot be displaced relative to the withdrawable insert (11, 12) passes through said withdrawable insert (11, 12), that section of the spindle which is provided with the thread (38) projecting out of the rear wall of the withdrawable insert (11, 12), and in that an internal thread is provided on the rear wall of the withdrawable-insert compartment, into which internal thread the external thread (38) of the spindle (35) can be screwed, so that the withdrawable insert can be moved into the pushed-in position by rotation of the spindle and by screwing the external thread (38) into the internal thread.

8. Switchgear cabinet according to Claim 7, in the case of which at least one withdrawable insert has power supply units for the supply of electronic installations in which capacitors are provided, a two-piece contact plug being arranged on the switchgear cabinet, which contact plug has a resistor located between the parts and engages [laguna] contact socket, located in a withdrawable insert, in such a manner that, after the first contact part has made contact with the mating contact, a current flows through [lacuna] resistor which is arranged in the contact plug, as a result of which the capacitors are charged, and that the mating contact does not make contact with the second contact part until after the capacitors have been charged, so that the resistor is bridged, characterized in that the thread of the internal thread in the socket (39) and of the external thread (38) of the spindle are dimensioned in such a manner that, when the threaded spindle (35) is rotated by means of a commercially available electric screwdriver at its maximum rate of rotation, the time period between the first contact part (62) and the second contact part (63) making contact with the mating contact is such that the charging of the capacitors in the withdrawable insert (11) is completed before the mating contact on the withdrawable insert (11) makes contact with the second contact part (63).

## Revendications

1. Armoire de distribution électrique, en particulier pour des installations à basse tension, comprenant au moins un tiroir (11, 12) rectangulaire allongé en direction verticale, susceptible d'être inséré dans un compartiment de l'armoire de distribution et muni de galets sur son côté inférieur, pour recevoir des composants électriques et/ou électroniques de commutation, réglage, etc., ledit tiroir présentant sur son côté arrière se trouvant à l'intérieur de l'armoire de distribution au moins élément de contact (71, 72, 73) susceptible d'être amené en contact avec une contre-pièce de contact fixe (62, 63, 64) dans l'armoire de distribution, caractérisé par le fait que le tiroir (11, 12) présente sur son côté inférieur, dans la zone de son côté avant, une articulation à accrochage (30, 32) sous la forme d'un trou oblong prévu sur chacune des deux surfaces latérales du tiroir dans la zone de fond de ce dernier, ledit trou présentant un alvéole à son extrémité éloigné du côté avant du tiroir pour former un crochet, ladite articulation à accrochage pouvant, en vue du montage, être accrochée dans une contre-pièce (26, 27) disposée au voisinage du fond et réalisée sous la forme de deux tourillons (26) disposés sur les surfaces latérales de chaque compartiment, délimitant ce dernier au moins partiellement, le trou allongé débouchant vers le côté fond par une ouverture (31) de sorte que lors de l'accrochage du tiroir, les deux tourillons parviennent à travers les ouvertures (31) dans les trous oblongs (30) de telle façon que le tiroir puisse être amené par pivotement, à partir d'une première position (position d'accrochage) dans laquelle il est incliné vers l'avant, après accrochage, dans une deuxième position (position d'insertion) dans laquelle le tiroir est déplaçable dans sa position enfoncée, et inversement.

2. Armoire de distribution suivant la revendication 1, caractérisée par le fait que le tourillon (26) porte un galet (27) qui roule sur l'un des bords (33) du trou oblong (30).

3. Armoire de distribution suivant l'une des revendications précédentes, caractérisée par le fait qu'un cadre dans lequel est disposé l'articulation à accrochage, en particulier les trous oblongs, est fixé sur le côté inférieur du tiroir (11, 12).

4. Armoire de distribution suivant l'une des revendications précédentes, caractérisée par le fait que la hauteur (H) de chaque tiroir est un multiple de sa largeur (B, B1).

5. Armoire de distribution suivant la revendication 2, caractérisée par le fait que la hauteur du tiroir (11, 12) correspond sensiblement à la hauteur de l'armoire de distribution.

6. Armoire de distribution suivant l'une des revendications précédentes, caractérisée par le fait que sur la paroi arrière de chaque tiroir (11, 12) sont disposés deux poignées (44, 45) se trouvant à distance réciproque, de sorte que le tiroir (11, 12) rectangulaire allongé puisse être transporté manuellement en position horizontale, son côté avant étant tourné vers le bas.

7. Armoire de distribution suivant l'une des revendications précédentes, caractérisée par le fait que le tiroir (11, 12) est traversé par une vis (35) s'étendant dans la direction d'insertion, munie d'un filetage extérieur (38) et maintenue de façon non déplaçable en translation par rapport au tiroir (11, 12), la partie de la vis munie du filetage (38) dépassant de la paroi arrière du tiroir (11, 12), et que sur la paroi arrière du compartiment est prévu un filetage intérieur dans lequel le filetage extérieur (38) de la vis (35) peut être vissé, de sorte que la rotation de la vis et le vissage du filetage extérieur (38) dans le filetage intérieur permet de déplacer le tiroir à la position enfoncée.

8. Armoire de distribution suivant la revendication 7, contenant des appareils branchés sur le réseau pour l'alimentation d'installations électroniques, le tiroir contenant des condensateurs, une broche de contact divisée en deux avec une résistance se trouvant entre les parties étant disposés sur l'armoire de distribution, cette broche pénétrant dans une douille de contact se trouvant dans le tiroir de telle manière qu'après établissement du contact entre la contre-pièce de contact et la première partie de contact, un courant traverse la résistance disposée dans la broche de contact pour charger les condensateurs, et que le contact entre la deuxième partie de contact et la contre-pièce de contact n'est établi et la résistance n'est shuntée qu'après chargement des condensateurs, caractérisée par le fait que le filetage intérieur (douille 39) sur le compartiment et le filetage (38) de la vis sont dimensionnés de manière que lors de la rotation de la vis (35) à l'aide d'une visseuse électrique du commerce, à la vitesse de rotation maximale de cette dernière, le temps s'écoulant entre l'établissement du contact de la première partie de contact (62) et de la deuxième partie de contact (63) avec la contre-pièce de contact est tel que le chargement des condensateurs dans le tiroir (11) soit achevé avant que soit établi le contact de la deuxième partie de contact (63) avec la contre-pièce de contact sur le tiroir (11).
